# EUROPEAN PATENT SPECIFICATION

(11) **EP 1 211 928 B1**
(45) Date of publication and mention of the grant of the patent: **28.07.2004**
(21) Application number: 00964862.7
(22) Date of filing: 15.09.2000
(51) Int. Cl.: A01J 5/017, G06T 7/00

(54) **AN APPARATUS AND A METHOD FOR IMPROVING TEATCUP ATTACHMENT, BY USING ILLUMINATING AND IMAGE CAPTURING MEANS**
VORRICHTUNG UND VERFAHREN ZUM VERBESSERN VON ANSETZUNG EINES MELKBECHERS, UNTER VERWENDUNG VON BELEUCHTUNG UND BILDAUFNAHMEMITTELN
APPAREIL ET PROCEDE PERMETTANT D'AMELIORER LA FIXATION DES GOBELETS TRAYEURS GRACE A DES MOYENS D'ILLUMINATION ET DE CAPTURE D'IMAGE

(30) Priority: 15.09.1999 SE 9903283
(43) Date of publication of application: 12.06.2002
(73) Proprietor: DeLaval Holding AB, 147 21 Tumba (SE)
(72) Inventor: NILSSON, Mats, S-147 31 Tumba (SE)
(74) Representative: Herbjörnsen, Rut
(86) International application number: PCT/SE2000/001791
(87) International publication number: WO 2001/019172

(56) References cited:
- EP-A1- 0 360 354
- WO-A1-98/44782
- WO-A1-98/47348
- WO-A1-99/33020

## Description

### Technical field of the invention

The invention relates to an apparatus and a method for improving attachment of teatcups and other animal related means onto at least one teat of an animal to be cleaned or milked. In particular, the invention is adapted to enhance the success rate of correctly attaching a teatcup onto a teat in a clam and animal friendly way. The invention also reduces the risk for udder attachment of the teatcup instead of teat attachment.

### Background of the invention

Over the last decades, a variety of techniques and devices have been used for recognising teats and determining their positions prior to more or less automated milking. An automated milking machine of today normally manages the whole procedure of milking, including recognition of teats, determination of teat positions, attachment of teatcups, cleaning, pre-milking, milking and disinfecting the udder and teat region of the animal.

However, the steps of recognising teats, determining the teat positions and attaching teatcups are not always straightforward and many complications of different kinds and seriousness might occur. Some of these complications could be for example reflections from objects in the background or a folded teat in a teatcup, which even could be painful to the milking animal apart from making automatic milking difficult. Milking animals have individual features and various physical constitutions, just like humans and other species. Different animals' teats have various shapes, sometimes changing with their age and pregnancy situation, and the teats can be located differently on the animals' udders. Some milking animals have inclined and/or crooked teats leading to additional difficulties when attempts are made to determine the correct teat positions. In particular when a teat of an animal is strongly inclined, the position of the teat tip in the horizontal plane is different from the position of the teat base near the udder in the same plane. Attachment of a teatcup onto a teat thus has to be very precise to reach a satisfactory success rate and to obtain a lenient, pleasant and healthy part of the milking procedure, which is easily accepted by the animals.

Complications of the above mentioned kinds during the attachment phase of a teatcup onto a teat has until today required at least attendance and sometimes attentive supervision by one or more operators, thereby removing some of the benefits of a reliable and fully automatic milking equipment. In order to improve automatic milking equipment and to make it more commercially interesting, improvements would be beneficial, especially concerning how to obtain a correct and reliable teat attachment of the animal related means, such as teatcups.

WO 98 44782 discloses an apparatus and a method of guiding a milking apparatus support towards a teat of an animal, whereby light of a first and a second light source is sent towards a region expected to contain a teat and a teat tip. A movement of the support means carrying the teatcup in vertical direction follows the initial illumination of a teat candidate in order to attach the teatcup.

### Summary of the invention

The object of the invention is to solve the above-mentioned problems that prior art is afflicted with. This could be done by means of an apparatus for determining the position in space of at least one teat, and in particular for determining the position in space of at least one teat tip, which is a teat end portion of a milking animal, comprising control means and a robot arm, movable in response to said control means, moving a support means carrying at least one animal related means, such as a teatcup, said support means being provided with an image capturing means, a first illuminating light source illuminating a first discrete area of the teat and
a second illuminating light source adapted to illuminate a second discrete area of the teat;
said control means being adapted to determine a position of the teat based on information provided by illumination with the first illuminating light source, and to determine a position of the teat tip based on information provided by illumination with the second illuminating light source; and
the support means being adapted to move in response to the, by said control means, determined position of the teat tip, while attaching the at least one animal related means, such as a teatcup, onto the teat.

The apparatus is further specified by the features of the characterising portion of claim 1.

Furthermore, a method is introduced, which has the object of solving the above-stated problems. It is solved by a method for determining the position in space of at least one teat, and in particular for determining the position in space of at least one teat tip, which is a teat end portion of a milking animal, comprising control means and a robot arm, movable in response to said control means, moving a support means carrying at least one animal related means, such as a teatcup, said support means being provided with an image capturing means and a first illuminating light source illuminating a first discrete area of the teat,
illuminating a second discrete area of the teat with a second illuminating light source;
determining a position of the teat based on information provided by illumination with the first illuminating light source, and determining a position of the teat tip based on information provided by illumination with the second illuminating light source; and
moving the support means in response to the, by said control means, determined teat tip position, while attaching the at least one animal related means, such as a teatcup, onto the teat.

The method is further specified by the step of the characterising portion of claim 10.

One advantage of the present invention is that teat attachment can be done from a position right below the teat tip, leading to a reduced rate of folded teats and wrongly attached teatcups.

Utilisation of the present invention according to the application will improve operation of automated milking equipment and provide a way of obtaining a lenient, pleasant and healthy treatment and milking procedure, which easily can be accepted by the milking animals. Furthermore, it will support the conception of a reliable and fully automatic milking equipment requiring a minimum of supervision by operators and which can be of substantial commercial value.

Another of the advantages of using two light sources in comparison to only one light source, is the ability to continue to follow a teat, even though one of the light sources has lost its target. This might be when the teat is searched for or the light source is directed towards an area other than the teat to be illuminated, for instance towards an area situated below the teat.

### Short description of the drawings

The present invention will now be discussed in more detail with reference to preferred embodiments of the present invention, given only by way of example, and illustrated in the accompanying drawings, in which:
Fig 1 shows a perspective view of a milking apparatus as a whole with its main parts outlined including support means.
Fig 2 depicts the support arrangement more in detail with operating principle of illuminating means and image capturing means.
Fig 3 shows one of many possible arrangements of illuminating means and image capturing means, both accommodated in their housing.
Fig 4 shows an alternative embodiment of the invention utilising a set-up with a different geometry.
Fig 5 is a diagrammatic flow chart displaying the sequence of attaching a teatcup onto a teat according to the invention.

### Detailed description

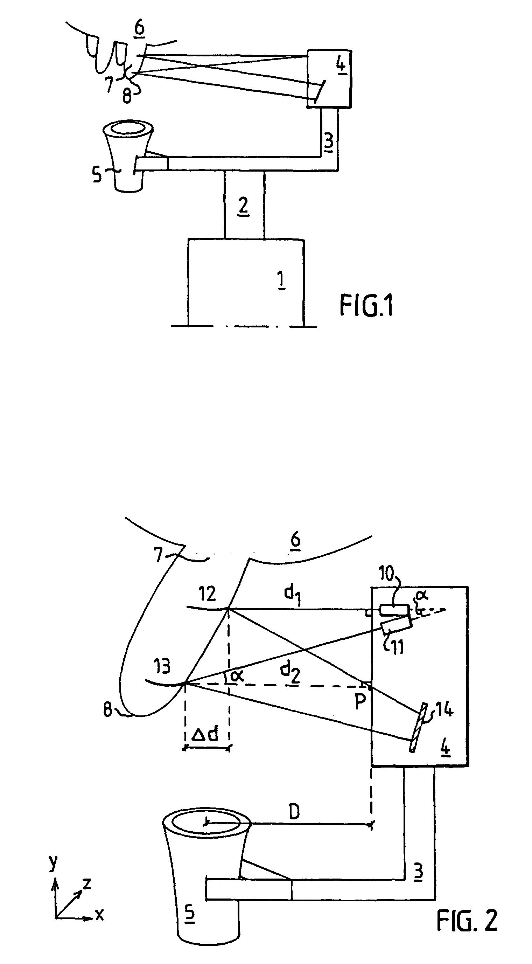

With reference to Fig 1, a principle drawing is shown of a first embodiment according to the present invention. The embodiment comprises a milking robot 1 in connection with a movable robot arm 2, moving in response to commands from a control means (not shown). A support means 3, such as a rod or bar, associates the robot arm 2 with at least one housing 4 and with various animal related means, such as a teatcup 5, a teat cleaner, teat brush, teat disinfecting mouthpiece or nozzle, etc. At least one light illuminating means is used for illuminating various parts of a milking animal, such as udder 6, teats 7 and/or teat tips 8. The illumination will be described in more detail in the following.

For clarity, the same notations have been used for the same features in all figures throughout the document.

Furthermore, referring to Fig 2, an inclined teat of a milking animal is illuminated by a first illuminating light source 10 as well as by a second illuminating light source 11. Each illuminating source in this case is a laser, which illuminates a plane of light, by means of optical arrangements, such as a 2-dimensionally dispersing lattice (not shown). A first discrete area 12 on the teat 7 is illuminated by the first illuminating light source 10, which first discrete area 12 is situated substantially in the same horizontal plane as the first illuminating light source 10. Towards the teat tip 8, a second discrete area 13 is illuminated by the second illuminating light source 11. The separation between the two illuminated discrete areas 12, 13 is due to an inclination angle α separating the beams from the illuminating lasers 10, 11. However, although the laser beams are illuminated from the light sources 10, 11 with a relative inclination angle α, the reflections from the teat 7, i.e. the first and the second illuminated discrete areas 12, 13 respectively, will be in parallel on the teat 7.

The direction of the second illuminating laser 11 downwards prevents its illuminated laser plane from hitting the top region of the teatcup 5 instead of hitting the target, i.e. the teat 7 to be illuminated. This is particularly the case when the teatcup 5 is raised for attachment and approaches the vicinity of the teat tip 8. By means of this downward directed second illuminating laser 11, it is possible to illuminate the teat tip 8 longer during the raise operation of the teatcup 5 without blocking the illuminated laser beam and hence without loosing any positioning information about the current teat tip 8 position.

In case a teat 7 is inclined and/or crooked, there will be a difference between a distance d₁ from the first light source 10 to the first illuminated discrete area 12, and a distance d₂ in parallel with d₁ from the second illuminated discrete area 13 to a position p on the housing, in the vertical plane perpendicular to the illuminated light beam from the first illuminating light source 10. This difference in distances is denoted Δd.

The distance Δd may be critical if it exceeds a margin of error which allows for attaching the teatcup 5 onto a teat 7 without complications. The above-mentioned margin is specific for each system, so no general value can be mentioned here. However, attachment of a teatcup 5 onto a teat 7 must be made with great precision to prevent the conceivable problems that already have been mentioned from occurring, and to give the farmer or any other operator well-founded confidence in the reliability of the milking apparatus.

Geometrical accuracy requirements, which requirements are specific for each system, set certain limitations concerning the angle between the at least two laser light planes and hence concerning a minimum separation between light sources and detector. In order to get an image of the teat 5 from longer distance, it is necessary to arrange one of the light sources in the substantially horizontal plane. According to one embodiment, it is conceivable to use only one pivoting illuminating light source as long as it can be used in various directions. This pivoting illuminating light source would function as substitute for at least one of illuminating light sources 10, 11 and provide the same conditions but with less illuminating light sources. Instead of, or in combination with, a pivoting illuminating light source, the same optical illumination result can be achieved by using optical arrangements, for example optically reflecting mirrors arranged to reflect the illumination from at least one illuminating light source in different directions.

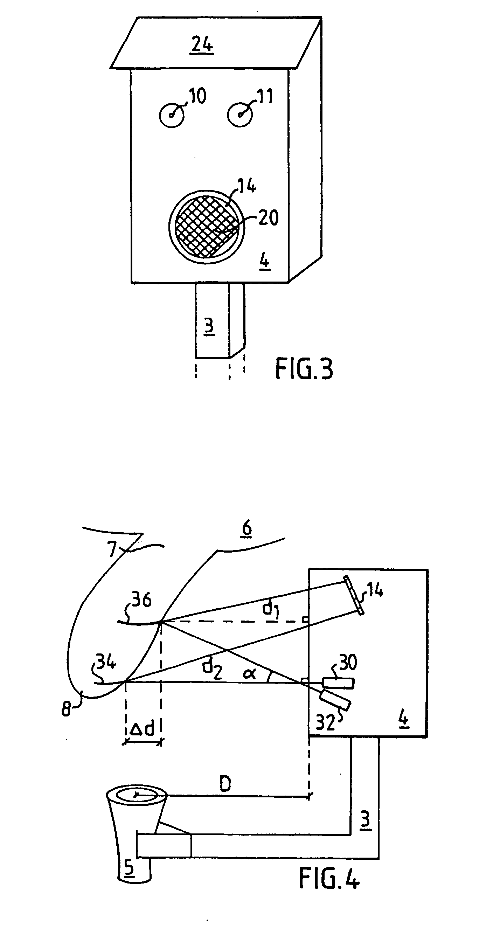

According to the first embodiment of the invention and still referring to Fig 2, an image of the illuminated teat 7 is reflected onto a detector surface 20 (see Fig 3) of an image capturing means 14 accommodated or in association with the housing 4. The captured images show the projections of the first and second discrete illuminated areas 12, 13 on different heights, depending on the distances d₁ and d₂.

The apparatus follows a sequence based on an algorithm for keeping both distances d₁ and d₂ in correspondence with a predetermined distance D to simplify the teat attachment as much as possible and enhance the success rate of correctly accomplished teatcup attachment.

However, when Δd is large because of an inclined and/or crooked teat 7, it is important to use the right discrete illuminated area when determining the distance from to the teat 7 to any well-defined position, such as for example p, in the vertical plane in parallel with the housing 4. When the support means 3 with integrated housing 4 and animal related means, such as a teatcup 5, is moved in any direction, the apparatus alternates between positional adjustments based on the first illuminated discrete area 12 and adjustments based on the second illuminated discrete area 13.

In one embodiment, this alternation is done with sequence of alternately twinkling illuminating light sources 10, 11. Such alternating twinkling of the light sources 10, 11 reduces unwanted reflections from the light source, which for the moment is not used for measuring and determining the distance. A twinkling procedure like the above simplifies image processing of the captured image. However, in another embodiment, both lasers 10, 11 are steadily illuminating, while the image processing unit is adapted to compensate with respect to these two steadily illuminating light sources 10, 11. Both methods described here yield the same qualitative results.

The distance D is a fixed distance, preferably around 100 mm. Since D is constant, once the correct relative distance between the teat 7 and/or teat tip 8 and some predefined point of the housing 4, such as for instance p, is found, the apparatus is adapted to maintain this relative distance, also if the animal moves during the attachment phase, thereby facilitating teatcup attachment even though the conditions may not be the easiest possible during the attachment phase.

Fig 3 shows the housing 4, which accommodates optical arrangements 10, 11, 14 according to the invention. An image capturing means 14 captures images which are transformed into information signals and furthermore are delivered to image processing means (not shown). Here they are used for recognition of teats 7 and determination of animal related distances. The image capturing means 14, preferably a camera, digital camera and/or a video camera (CCD-camera), comprises a detector surface 20 onto which images are projected. The detector surface 20 may include for instance a detector array of several detector elements, so-called pixels, convenient for transforming a captured image into an image signal.

Furthermore, the housing accommodates the first and the second illuminating light sources 10, 11, preferably illuminating lasers, of which one of them illuminates the substantial horizontal plane and the other illuminates another plane, separated by an angle α. When the housing 4 is moved upwards, for instance when a teat 7 is searched for and/or the teatcup 5 is raised for teat attachment, it is conceivable that the light beams from the illuminating light sources 10, 11 may be blocked by an udder 6 hanging down in front of the housing 4. If this blocking would occur, the apparatus no longer could manage to recognise teats 7 and determine the distances and thereafter calculate the teat positions. For this reason, the housing 4 is provided with a means 24, preventing the udder to block illuminated light beams from the first and second illuminating light sources 10, 11 as well as preventing from shading of the image capturing means 14. The preventing means 24 keeps the optical components 14, 30, 32 of the housing 4 clean and is found on top of the housing 4 in Fig 3 and somewhat resembles a peak of a cap.

In another embodiment according to Fig 4, the present invention is realised using a different geometry. This different geometry has at least one advantage, in comparison with the above described first embodiment, since it deals with the unwanted situation when optical components 14, 30, 32 comprised in the housing 4 are blocked. Such blocking especially occurs when the housing 4 is raised and consequently is blocked by an udder 6 hanging down in front of for instance the detector surface 20 of the image capturing means 14. In Fig 4 is shown a first illuminating light source 30 and a second illuminating light source 32. The illuminating light sources 30, 32 illuminate a first discrete area 34 on a teat candidate and a second discrete area 36 respectively. By comparing the two parallel distances d₁ and d₂ in the same vertical plane between the teat and the housing 4, it is possible to determine a difference in distances Δd in analogy with the above-described method.

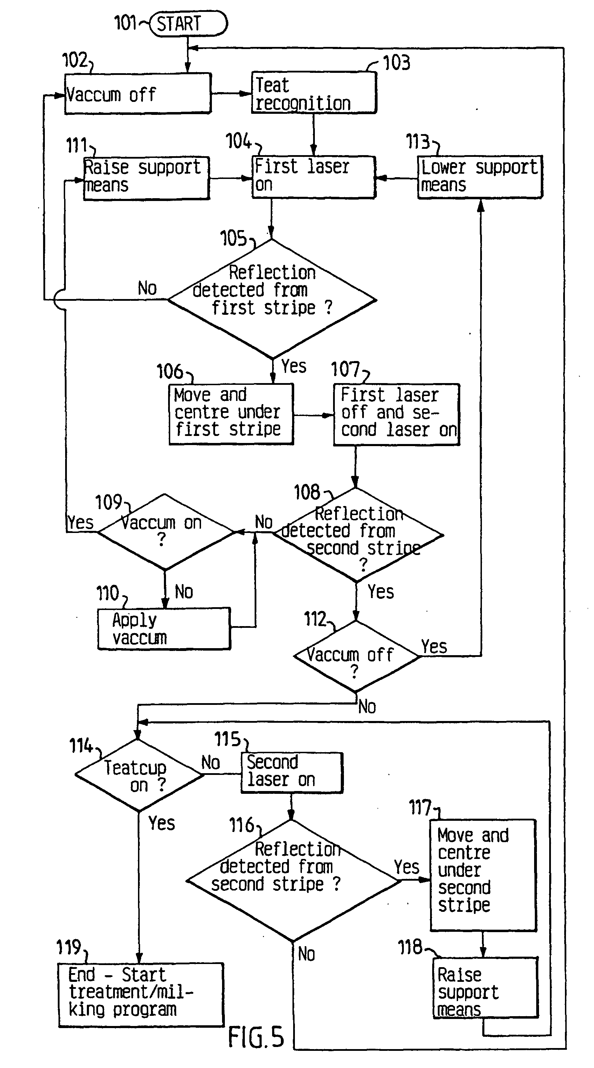

Fig 5 shows a diagrammatic operational flow chart of the invention. Beginning on top of the flow chart, the functional algorithm of the apparatus starts (step 101) with switching off a possible vacuum level (step 102) in a teatcup followed by recognition of a teat candidate (step 103). The recognition is followed by the substantially horizontally directed illumination of the teat candidate with the first illuminating light source 10, which light source 10 is denoted first laser in the flow chart of Fig 5 (step 104). If the illumination from the first light source 10, which illumination is called first stripe in the flow chart, can be detected by the image capturing means 14 (step 105), the support means 3 is moved in a way that the teatcup 5 is centred under the so-called first stripe (step 106). After this initial adjusting movement, the sequence continues with switching off the first illuminating light source 10 at the same time as the second illuminating light source 11 is switched on (step 107). In accordance with one embodiment, the second illuminating light source 11 is directed downwards with an inclination angle α with respect to the first illuminating light source 10 (see Fig 2). If no first stripe can be detected (step 105) from the first illuminating light source 10 by the image capturing means 14, the sequence returns back to the initial switching off a possible vacuum level (step 102) and further continues along the sequence from there.

If illumination, called stripe in the flow chart, from the second illuminating light source 11 is detected (step 108) by the image capturing means 14, the sequence continues with controlling whether the vacuum level is switched off (step 112). If no laser stripe is detected (step 108) from the second illuminating light source 11, a control of the vacuum level is done (step 109). If there is no vacuum, vacuum is applied (step 110) and otherwise the control is followed by a raise of the support means 3 (step 111), whereby the sequence returns back to switching on the first illuminating light source 10 (step 104). On the other hand, if reflection was detected (step 108) and no vacuum was applied (step 112), the support means 3 carrying the housing 4 as well as the animal related means, such as a teatcup 5, is lowered (step 113), whereby the sequence also from here returns back to switching on the first illuminating light source 10 (step 104).

In case the control of whether the vacuum level was switched off (step 112) results in a negative answer, a check is carried out of whether the teatcup 5 has been attached in a correct way (step 114). Should the answer be negative, the second illuminating light source 11 is switched on (step 115) followed by a check of whether reflection from the second illuminating light source 11, i.e. the second stripe according to the flow chart of Fig 5, can be detected by the image capturing means 14 (step 116).

It no reflection of a second stripe (step 116), i.e. reflection from the second illuminating light source 11 can be detected, the sequence returns back to its starting point or at least to the switching off vacuum (102), since the attachment of a teatcup 5 onto a teat 7 has been unsuccessful. Consequently, a new attempt at attaching the teatcup 5 must be made. However, in the other case when reflection of a second stripe can be detected (step 116) by the image capturing means 14, leads to a further and more precise movement of the support means 3 in order to finally centre the teatcup 5 right below the teat tip 8 (step 117).

After having centred the teatcup under the teat tip 8, the support means is raised (118) followed by another check of whether the teatcup 5 is correctly attached to the teat 5 or not (step 114). If the teatcup 5 is correctly attached, the sequence is brought to an end (step 119) and a program for further treatment and/or milking may begin.

As the above-described sequence is gone through, it can be seen as a twinkling procedure between the first and the second illuminating light sources 10, 11. In this case, twinkling means an alternately switching procedure of the first and the second illuminating light sources 10, 11. Twinkling is used to provide good conditions without disturbing reflections for the image capturing means 14 to detect the searched position in space, which will be interpreted and referred to as the teat tip 8.

This sequential method, which utilises twinkling has the advantage, that the teat shape, especially with an inclined and/or a crooked anatomy of the teat 7, can be followed closely in a zigzag pattern by utilising detected and processed positional information alternately from both of the first and the second illuminating light sources 10, 11. Such zigzag manoeuvring enhances the correct teatcup attachment rate substantially and hence the reliability and efficiency of the automated milking equipment.

As already mentioned, twinkling light sources 10, 11 are not a necessity in a system of the above described kind. By using image processing, a sequence without twinkling but with steadily illuminating light sources can be realised just as well. As described above, both methods lead to the same results, but in different ways.

## Claims

1. An apparatus for determining the position in space of at least one teat (7), and in particular for determining the position in space of at least one teat tip (8), which is a teat end portion of a milking animal, comprising control means and a robot arm (2), movable in response to said control means, moving a support means (3) carrying at least one animal related means, such as a teatcup (5), said support means (3) being provided with an image capturing means (14), a first illuminating light source (10) illuminating a first discrete area (12) of the teat (7),
a second illuminating light source (11) adapted to illuminate a second discrete area (13) of the teat (7);
said control means being adapted to determine a position of the teat (7) based on information provided by illumination with the first illuminating light source (10), and to determine a position of the teat tip (8) based on information provided by illumination with the second illuminating light source (11); and
the support means (3) being adapted to move in response to the, by said control means, determined position of the teat tip (8), while attaching the at least one animal related means, such as a teatcup (5), onto the teat (7);
**characterised in that**
the support means (3) is adapted to adjust its position in response to the control means by alternately using information provided by detection of illumination from the first illuminating light source (10) and information provided by detection of illumination from the second illuminating light source (11).

2. An apparatus according to claim 1, **characterised in that**
the first illuminating light source (10) is directed perpendicular to the vertical plane and towards an expected area of finding the teat (7); and
the second illuminating light source (11) is inclined with respect to the first illuminating light source (10) towards an expected area of finding the teat tip (8), whereby blocking of the illumination between the second illuminating light source (11) and the teat tip (8) is prevented.

3. An apparatus according to claim 2, **characterised in that**
the second illuminating light source (11) is inclined downwards with an angle (α) towards the opening of the teatcup (5), whereby blocking of the illumination between the second illuminating light source (11) and the teat tip (8) is prevented.

4. An apparatus according to claim 3, **characterised in that**
the first and the second illuminating light sources (10, 11) are adapted to alternately illuminate light when the support means (3) is moved in vertical direction.

5. An apparatus according to claim 3, **characterised in that**
the support means (3) is adapted to move step-wise in response to received information from the alternately illuminating light sources (10, 11).

6. An apparatus according to claim 3, **characterised in that**
the support means (3) is adapted to move step-wise in a zigzag-pattern in response to received information from the alternately illuminating light sources (10, 11).

7. An apparatus according anyone of the preceding claims, **characterised in that**
a housing (4) is provided with a means (24) preventing optical components (10, 11, 14) accommodated in the housing (4) to be blocked by objects, such as an udder (6) hanging down in front of the housing (4).

8. An apparatus according to anyone of preceding claims, **characterised in that**
the first and/or the second illuminating light sources (10, 11) illuminate structured and/or monochromatic light, such as illumination from a laser source and/or infrared source.

9. An apparatus according to anyone of preceding claims, **characterised in that**
the first and the second illuminating light sources (10, 11) are combined in one pivotally arranged and movable illuminating light source adapted to illuminate in different directions.

10. A method for determining the position in space of at least one teat (7), and in particular for determining the position in space of at least one teat tip (8), which is a teat end portion of a milking animal, comprising control means and a robot arm (2), movable in response to said control means, moving a support means (3) carrying at least one animal related means, such as a teatcup (5), said support means (3) being provided with an image capturing means (14), a first illuminating light source (10) illuminating a first discrete area (12) of the teat (7),
illuminating a second discrete area (13) of the teat (7) with a second illuminating light source (11);
determining a position of the teat (7) based on information provided by illumination with the first illuminating light source (10), and determining a position of the teat tip (8) based on information provided by illumination with the second illuminating light source (11); and
moving the support means (3) in response to the, by said control means, determined teat tip (8) position, while attaching the at least one animal related means, such as a teatcup (5), onto the teat (7);
**characterised by the step of**
adjusting the position of the support means (3) in response to the control means by alternately using information provided by detection of illumination from the first illuminating light source (10) and information provided by detection of illumination from the second illuminating light source (11).

11. A method according to claim 10, **characterised by**
directing the first illuminating light source (10) perpendicular to the vertical plane and towards an expected area of finding the teat (7); and
inclining the second illuminating light source (11) with respect to the first illuminating light source (10) towards an expected area of finding the teat tip (8), whereby blocking of the illumination between the second illuminating light source (11) and the teat tip (8) is prevented.

12. A method according to claim 11, **characterised by**
inclining the second illuminating light source (11) downwards with an angle (α) towards the opening of the teatcup (5), whereby blocking of the illumination between the second illuminating light source (11) and the teat tip (8) is prevented.

13. A method according to claim 12, **characterised by**
adapting the first and the second illuminating light sources (10, 11) to alternately illuminate light when the support means (3) is moved in vertical direction.

14. A method according to claim 13, **characterised by**
adapting the support means (3) to move step-wise in response to received information from the alternately illuminating light sources (10, 11).

15. A method according to claim 13, **characterised by**
adapting the support means (3) to move step-wise in a zigzag-pattern in response to received information from the alternately illuminating light sources (10, 11).

16. A method according to anyone of the claims 10-15, **characterised by**
providing a housing (4) with a means (24) preventing optical components (10, 11, 14) accommodated in the housing (4) to be blocked by objects, such as an udder (6) hanging down in front of the housing (4).

17. A method according to anyone of the claims 10-16, **characterised in that**
illuminate structured and/or monochromatic light, such as illumination from a laser source and/or infrared source with the first and/or the second illuminating light sources (10, 11).

## Patentansprüche

1. Vorrichtung zur Bestimmung der Position mindestens einer Zitze (7) im Raum, insbesondere zur Bestimmung der Position der Spitze (8) einer Zitze im Raum, wobei die Spitze eine Zitzenendpartie eines Milchtiers ist, mit Steuermitteln und einem in Reaktion auf die Steuermittel bewegbaren Roboterarm (2), der ein mindestens ein tierbezogenes Mittel, beispielsweise einen Zitzenbecher (5), tragendes Haltermittel (3) bewegt, wobei das Haltermittel (3) ein Bilderfassungsmittel (14) aufweist, wobei eine erste Lichtquelle (10) eine erste diskrete Fläche (12) der Zitze (7) beleuchtet, wobei eine zweite Lichtquelle (11) eine zweite diskrete Fläche (13) der Zitze beleuchtet, wobei die Steuermittel dazu bestimmt sind, auf der Basis von Informationen, die durch die Beleuchtung mit der ersten Lichtquelle (10) erhalten werden, die Position der Zitze (7) zu bestimmen, und die Position der Spitze (8) der Zitze auf der Basis von Informationen, die durch die Beleuchtung mit der zweiten Lichtquelle (11) erhalten werden, und wobei das Haltermittel (3) in Reaktion auf die durch die Steuermittel bestimmte Position der Spitze (8) der Zitze bewegbar ist, während das mindestens eine tierbezogene Mittel, beispielsweise ein Zitzenbecher (5), an der Zitze (7) befestigt wird, **dadurch gekennzeichnet, dass** das Haltermittel (3) seine Position in Reaktion auf die Steuermittel einstellt, indem abwechselnd Informationen verwendet werden, die durch Erfassung der Beleuchtung durch die erste Lichtquelle (10) erhalten werden, und Informationen, die durch die Erfassung der Beleuchtung durch die zweite Lichtquelle (11) erhalten werden.

2. Vorrichtung nach Anspruch 1, **dadurch gekennzeichnet, dass** die erste Lichtquelle (10) senkrecht zur vertikalen Ebene und in Richtung eines Bereichs gerichtet ist, in dem das Auffinden der Zitze (7) erwartet wird, und dass die zweite Lichtquelle (11) bezüglich der ersten Lichtquelle (10) in Richtung eines Bereichs geneigt angeordnet ist, in dem das Auffinden der Spitze (8) der Zitze erwartet wird, wodurch ein Blockieren der Beleuchtung zwischen der zweiten Lichtquelle (11) und der Spitze (8) der Zitze verhindert wird.

3. Vorrichtung nach Anspruch 2, **dadurch gekennzeichnet, dass** die zweite Lichtquelle (11) in einem Winkel (α) nach. unten auf die Öffnung des Zitzenbechers (5) gerichtet ist, wodurch ein Blockieren der Beleuchtung zwischen der zweiten Lichtquelle (11) und der Spitze (8) der Zitze verhindert wird.

4. Vorrichtung nach Anspruch 3, **dadurch gekennzeichnet, dass** die erste und zweite Lichtquelle (10, 11) alternierend beleuchten, wenn das Haltermittel (3) in vertikaler Richtung bewegt wird.

5. Vorrichtung nach Anspruch 3, **dadurch gekennzeichnet, dass** das Haltermittel (3) schrittweise in Reaktion auf Information bewegbar ist, die von den alternierend beleuchtenden Lichtquellen (10, 11) erhalten werden.

6. Vorrichtung nach Anspruch 3, **dadurch gekennzeichnet, dass** das Haltermittel (3) schrittweise in einem Zickzackmuster in Reaktion auf Information bewegbar ist, die von den alternierend beleuchtenden Lichtquellen (10, 11) erhalten werden.

7. Vorrichtung nach einem der vorangehenden Ansprüche, **dadurch gekennzeichnet, dass** ein Gehäuse (4) mit Mitteln (24) vorgesehen ist, die ein Blockieren von in dem Gehäuse (4) angeordneten optischen Komponenten (10, 11, 14) durch Objekte, beispielsweise ein vor dem Gehäuse herabhängendes Euter (6), verhindern.

8. Vorrichtung nach einem der vorangehenden Ansprüche, **dadurch gekennzeichnet, dass** die erste und/oder zweite Lichtquelle (10, 11) strukturiertes und/oder monochromatisches Licht aussenden, wie dies beispielsweise durch eine Laserquelle und/oder eine Infrarotquelle erzeugt wird.

9. Vorrichtung nach einem der vorangehenden Ansprüche, **dadurch gekennzeichnet, dass** die erste und zweite Lichtquelle (10, 11) in einer schwenkbar angeordneten, bewegbaren Lichtquelle zusammengefasst sind, die in unterschiedliche Richtungen leuchten kann.

10. Verfahren zur Bestimmung der Position mindestens einer Zitze (7) im Raum, insbesondere zur Bestimmung der Position der Spitze (8) einer Zitze im Raum, wobei die Spitze eine Zitzenendpartie eines Milchtiers ist, mit Steuermitteln und einem in Reaktion auf die Steuermittel bewegbaren Roboterarm (2), der ein mindestens ein tierbezogenes Mittel, beispielsweise einen Zitzenbecher (5), tragendes Haltermittel (3) bewegt, wobei das Haltermittel (3) ein Bilderfassungsmittel (14) aufweist, wobei eine erste Lichtquelle (10) eine erste diskrete Fläche (12) der Zitze (7) beleuchtet, wobei eine zweite Lichtquelle (11) eine zweite diskrete Fläche (13) der Zitze beleuchtet, wobei auf der Basis von Informationen, die durch die Beleuchtung mit der ersten Lichtquelle (10) erhalten werden, die Position der Zitze (7) bestimmt wird, und die Position der Spitze (8) der Zitze auf der Basis von Informationen, die durch die Beleuchtung mit der zweiten Lichtquelle (11) erhalten werden, und wobei das Haltermittel (3) in Reaktion auf die durch die Steuermittel bestimmte Position der Spitze (8) der Zitze bewegt wird, während das mindestens eine tierbezogene Mittel, beispielsweise ein Zitzenbecher (5), an der Zitze (7) befestigt wird, **dadurch gekennzeichnet, dass** die Position des Haltermittels (3) in Reaktion auf die Steuermittel eingestellt wird, indem abwechselnd Informationen verwendet werden, die durch Erfassung der Beleuchtung durch die erste Lichtquelle (10) erhalten werden, und Informationen, die durch die Erfassung der Beleuchtung durch die zweite Lichtquelle (11) erhalten werden.

11. Verfahren nach Anspruch 10, **dadurch gekennzeichnet, dass** die erste Lichtquelle (10) senkrecht zur vertikalen Ebene und in Richtung eines Bereichs gerichtet wird, in dem das Auffinden der Zitze (7) erwartet wird, und dass die zweite Lichtquelle (11) bezüglich der ersten Lichtquelle (10) in Richtung eines Bereichs geneigt angeordnet wird, in dem das Auffinden der Spitze (8) der Zitze erwartet wird, wodurch ein Blockieren der Beleuchtung zwischen der zweiten Lichtquelle (11) und der Spitze (8) der Zitze verhindert wird.

12. Verfahren nach Anspruch 11, **dadurch gekennzeichnet, dass** die zweite Lichtquelle (11) in einem Winkel (α) nach unten auf die Öffnung des Zitzenbechers (5) gerichtet wird, wodurch ein Blockieren der Beleuchtung zwischen der zweiten Lichtquelle (11) und der Spitze (8) der Zitze verhindert wird.

13. Verfahren nach Anspruch 12, **dadurch gekennzeichnet, dass** die erste und zweite Lichtquelle (10, 11) alternierend beleuchten, wenn das Haltermittel (3) in vertikaler Richtung bewegt wird.

14. Verfahren nach Anspruch 13, **dadurch gekennzeichnet, dass** das Haltermittel (3) schrittweise in Reaktion auf Information bewegt wird, die von den alternierend beleuchtenden Lichtquellen (10, 11) erhalten werden.

15. Verfahren nach Anspruch 13, **dadurch gekennzeichnet, dass** das Haltermittel (3) schrittweise in einem Zickzackmuster in Reaktion auf Information bewegt wird, die von den alternierend beleuchtenden Lichtquellen (10, 11) erhalten werden.

16. Verfahren nach einem der Ansprüche 10 bis 15, **dadurch gekennzeichnet, dass** ein Gehäuse (4) mit Mitteln (24) vorgesehen wird, die ein Blockieren von in dem Gehäuse (4) angeordneten optischen Komponenten (10, 11, 14) durch Objekte, beispielsweise ein vor dem Gehäuse herabhängendes Euter (6), verhindern.

17. Verfahren nach einem der Ansprüche 10 bis 16, **dadurch gekennzeichnet, dass** die erste und/oder zweite Lichtquelle (10, 11) strukturiertes und/oder monochromatisches Licht aussenden, wie dies beispielsweise durch eine Laserquelle und/oder eine Infrarotquelle erzeugt wird.

## Revendications

1. Appareil servant à déterminer la position dans l'espace d'au moins un trayon (7), et en particulier la position dans l'espace d'au moins un bout (8) de trayon, qui est une extrémité de trayon d'un animal de traite, comprenant un moyen de commande et un bras de robot (2), mobile en réponse audit moyen de commande, en déplaçant un moyen de support (3) portant au moins un moyen se rapportant à un animal, tel qu'un gobelet trayeur (5), ledit moyen de support (3) étant muni d'un moyen de capture d'images (14), une première source de lumière d'éclairage (10) éclairant une première zone discrète (12) du trayon (7), une deuxième source de lumière d'éclairage (11) adaptée pour éclairer une deuxième zone discrète (13) du trayon (7) ;
une ledit moyen de commande étant adapté pour déterminer une position du trayon (7) en fonction d'informations fournies par l'éclairage assuré par la première source de lumière d'éclairage (10), et pour déterminer une position du bout (8) de trayon en fonction d'informations fournies par l'éclairage assuré par la deuxième source de lumière d'éclairage (11) ; et
le moyen de support (3) étant adapté pour se déplacer en réponse à la position du bout (8) de trayon déterminée par ledit moyen de commande, tout en fixant ledit au moins un moyen se rapportant à un animal, tel qu'un gobelet trayeur (5), sur le trayon (7) ;
**caractérisé en ce que** le moyen de support (3) est adapté pour ajuster sa position en réponse au moyen de commande en utilisant alternativement les informations fournies par la détection de l'éclairage provenant de la première source de lumière d'éclairage (10) et les informations fournies par la détection de l'éclairage provenant de la deuxième source de lumière d'éclairage (11).

2. Appareil selon la revendication 1, **caractérisé en ce que** :
la première source de lumière d'éclairage (10) est orientée perpendiculairement au plan vertical et vers une zone où l'on s'attend à trouver le trayon (7) ; et
la deuxième source de lumière d'éclairage (11) est inclinée par rapport à la première source de lumière d'éclairage (10) vers une zone où l'on s'attend à trouver le bout (8) de trayon, grâce à quoi le blocage de l'éclairage entre la deuxième source de lumière d'éclairage (11) et le bout (8) de trayon est empêché.

3. Appareil selon la revendication 2, **caractérisé en ce que** la deuxième source de lumière d'éclairage (11) est inclinée vers le bas d'un angle (α) vers l'ouverture du gobelet trayeur (5), grâce à quoi le blocage de l'éclairage entre la deuxième source de lumière d'éclairage (11) et le bout (8) de trayon est empêché.

4. Appareil selon la revendication 3, **caractérisé en ce que** la première et la deuxième sources de lumière d'éclairage (10, 11) sont adaptées pour éclairer alternativement lorsque le moyen de support (3) est déplacé dans le sens vertical.

5. Appareil selon la revendication 3, **caractérisé en ce que** le moyen de support (3) est adapté pour se déplacer pas à pas en réponse aux informations transmises par les sources de lumière éclairant alternativement (10, 11).

6. Appareil selon la revendication 3, **caractérisé en ce que** le moyen de support (3) est adapté pour se déplacer pas à pas en zigzag en réponse aux informations transmises par les sources de lumière éclairant alternativement (10, 11).

7. Appareil selon l'une quelconque des revendications précédentes, **caractérisé en ce qu'**un boîtier (4) est muni d'un moyen (24) empêchant les composants optiques (10, 11, 14) logés dans le boîtier (4) d'être bloqués par des objets, tels qu'un pis (6) se trouvant devant le boîtier (4).

8. Appareil selon l'une quelconque des revendications précédentes, **caractérisé en ce que** la première et/ou la deuxième sources de lumière d'éclairage (10, 11) donnent une lumière structurée et/ou monochromatique, telle que celle obtenue avec une source laser et/ou une source infrarouge.

9. Appareil selon l'une quelconque des revendications précédentes, **caractérisé en ce que** la première et la deuxième sources de lumière d'éclairage (10, 11) sont associées en une source de lumière d'éclairage agencée à pivotement et mobile, adaptée pour éclairer dans différentes directions.

10. Procédé de détermination de la position dans l'espace d'au moins un trayon (7), et en particulier la position dans l'espace d'au moins un bout (8) de trayon, qui est une extrémité de trayon d'un animal de traite, comprenant un moyen de commande et un bras de robot (2), mobile en réponse audit moyen de commande, en déplaçant un moyen de support (3) portant au moins un moyen se rapportant à un animal, tel qu'un gobelet trayeur (5), ledit moyen de support (3) étant muni d'un moyen de capture d'images (14), une première source de lumière d'éclairage (10) éclairant une première zone discrète (12) du trayon (7), comprenant les étapes consistant à éclairer une deuxième zone discrète (13) du trayon (7) avec une deuxième source de lumière d'éclairage (11), déterminer une position du trayon (7) en fonction d'informations fournies par l'éclairage assuré par la première source de lumière d'éclairage (10), et déterminer une position du bout (8) de trayon en fonction d'informations fournies par l'éclairage assuré par la deuxième source de lumière d'éclairage (11), et déplacer le moyen de support (3) en réponse à la position du bout (8) de trayon déterminée par ledit moyen de commande, tout en fixant ledit au moins un moyen se rapportant à un animal, tel qu'un gobelet trayeur (5), sur le trayon (7) ;
**caractérisé par** l'étape consistant à ajuster la position du moyen de support (3) en réponse au moyen de commande en utilisant alternativement les informations fournies par la détection de l'éclairage provenant de la première source de lumière d'éclairage (10) et les informations fournies par la détection de l'éclairage provenant de la deuxième source de lumière d'éclairage (11).

11. Procédé selon la revendication 10, **caractérisé par** le fait d'orienter la première source de lumière d'éclairage (10) perpendiculairement au plan vertical et vers une zone où l'on s'attend à trouver le trayon (7), et d'incliner la deuxième source de lumière d'éclairage (11) par rapport à la première source de lumière d'éclairage (10) vers une zone où l'on s'attend à trouver le bout (8) de trayon, grâce à quoi le blocage de l'éclairage entre la deuxième source de lumière d'éclairage (11) et le bout (8) de trayon est empêché.

12. Procédé selon la revendication 11, **caractérisé par** le fait d'incliner la deuxième source de lumière d'éclairage (11) vers le bas d'un angle (α) vers l'ouverture du gobelet trayeur (5), grâce à quoi le blocage de l'éclairage entre la deuxième source de lumière d'éclairage (11) et le bout (8) de trayon est empêché.

13. Procédé selon la revendication 12, **caractérisé par** le fait d'adapter la première et la deuxième sources de lumière d'éclairage (10, 11) pour éclairer alternativement lorsque le moyen de support (3) est déplacé dans le sens vertical.

14. Procédé selon la revendication 13, **caractérisé par** le fait d'adapter le moyen de support (3) pour qu'il se déplace pas à pas en réponse aux informations transmises par les sources de lumière éclairant alternativement (10, 11).

15. Procédé selon la revendication 13, **caractérisé par** le fait d'adapter le moyen de support (3) pour qu'il se déplace pas à pas en zigzag en réponse aux informations transmises par les sources de lumière éclairant alternativement (10, 11).

16. Procédé selon l'une quelconque des revendications 10 à 15, **caractérisé par** le fait de munir un boîtier (4) d'un moyen (24) empêchant les composants optiques (10, 11, 14) logés dans le boîtier (4) d'être bloqués par des objets, tels qu'un pis (6) se trouvant devant le boîtier (4).

17. Procédé selon l'une quelconque des revendications 10 à 16, **caractérisé par** le fait d'éclairer avec une lumière structurée et/ou monochromatique, telle que celle obtenue avec une source laser et/ou une source infrarouge, au moyen de la première et/ou la deuxième sources de lumière d'éclairage (10, 11).
